# EUROPEAN PATENT SPECIFICATION

(11) **EP 3 981 866 B1**
(45) Date of publication and mention of the grant of the patent: **22.07.2026**
(21) Application number: 20819477.9
(22) Date of filing: 28.04.2020
(51) Int. Cl.: C12G 3/06, C12H 6/02

(54) **METHOD FOR PRODUCING A DISTILLED SPIRIT**
VERFAHREN ZUR HERSTELLUNG EINER DESTILLIERTEN SPIRITUOSE
PROCÉDÉ DE FABRICATION D'UN SPIRITUEUX DISTILLÉ

(30) Priority: 07.06.2019 JP 2019107279
(43) Date of publication of application: 13.04.2022
(73) Proprietor: Suntory Holdings Limited, Osaka 530-8203 (JP)
(72) Inventor: TAKAGI, Daisuke, Kawasaki-shi, Kanagawa 211-0067 (JP); USHIKU, Jun, Kawasaki-shi, Kanagawa 211-0067 (JP)
(74) Representative: Vossius & Partner Patentanwälte Rechtsanwälte mbB
(86) International application number: PCT/JP2020/018081
(87) International publication number: WO 2020/246184

(56) References cited:
- WO-A1-2017/095915
- CN-B- 101 045 895
- JP-A- 2016 067 316
- JP-A- 2016 135 110
- JP-A- 2016 220 633
- JP-A- 2018 050 504
- GREER, D. ET AL.: "Comparison of a novel distillation method versus a traditional distillation method in a model gin system using liquid/liquid extraction", JOURNAL OF AGRICULTURAL AND FOOD CHEMISTRY, vol. 56, 2008, pages 9030 - 9036, XP055767211

## Description

### TECHNICAL FIELD

The present invention relates to a method for producing a distilled liquor.

### BACKGROUND ART

There are various known methods for production by distillation of an essential oil or an aqueous alcohol solution which comprise an aroma component recovered from a fruit pulp, pericarp or the like.

For example, PTL 1 discloses a method for producing a distilled liquor, the method characterized in that a pericarp of a raw citrus fruit or apple is immersed in an alcohol and the immersion liquid is distilled under reduced pressure. Also, PTL 2 discloses that residues after squeezing a citrus fruit are treated with an enzyme such as cellulase or pectinase, and distilled under reduced pressure to efficiently produce an essential oil and a floral water.

With regard to distillation, PTL 3 discloses a shochu distillation method in which a fermented mash is distilled while part of a condensate liquid obtained by distillation is refluxed. Further, PTL 4 discloses that the pericarp of *Citrus junos* is put into a still and the contents of the still are distilled under atmospheric pressure, and then, while ethanol and water are added, a distillate is recovered at the timing when the ethanol concentration in the distillate falls within the range of from 10 to 50%.

WO 2017/095915 A1 discloses an alcoholic beverage having the sensory characteristics of a flavored distilled spirit.

JP2018050504A relates to a packaged alcoholic beverage, a method for producing the same, and a method for imparting a stimulating sensation to a packaged alcoholic beverage containing a plant-infused distilled spirit and/or its distillate.

### CITATION LIST

### PATENT LITERATURES

| | |
|---|---|
| PTL 1: | Japanese Patent No. JP 4302871 |
| PTL 2: | Japanese Unexamined Patent Application Publication No. JP 2004-18737 |
| PTL 3: | Japanese Patent No. JP 2829407 |
| PTL 4: | Japanese Unexamined Patent Application Publication No. JP 2016-67316 |

### SUMMARY OF INVENTION

### TECHNICAL PROBLEM

In general, with regard to the distillation of distilled liquors, recovered distilled liquors differ in aroma depending on the timing when the distilled liquors are distilled out, and some distilled liquors may give off a noticeable unfavorable odor, such as overboiled or burnt odor, depending on distillation conditions.

Distilled liquors having a citrus aroma imparted thereto are not only drunk neat but also used in blend with other beverages or foods. However, it is difficult to prevent a distilled liquor from giving off an unfavorable odor caused by distillation while allowing the distilled liquor to fully retain an excellent citrus aroma.

### SOLUTION TO PROBLEM

As a result of intensive studies to solve the aforementioned problem, the present inventors have found that during the process of distillation of an aqueous ethanol solution having a citrus fruit immersed therein, when the ethanol concentration of a distillate during its production falls within a specified range under no addition of ethanol or water, favorable citrus aroma components can be collected in large amounts while highly irritating components, or an unfavorable odor, are prevented from being increasingly infused into the distillate.

The present invention provides the subject-matter as claimed in claims 1 to 4 appended hereto.

### ADVANTAGEOUS EFFECTS OF INVENTION

The present invention makes it possible to collect citrus aroma components in larger amounts while preventing an unfavorable odor from being infused into a distillate, during the process of distillation of an aqueous ethanol solution having a citrus fruit comprising an orange pericarp immersed therein.

### DESCRIPTION OF EMBODIMENTS

### Aqueous ethanol solution

The "aqueous ethanol solution" used as a source material to make a distilled liquor in the present invention refers to an aqueous solution containing ethanol. The aqueous ethanol solution not only comprises ethanol and water but may also contain other components such as aroma components. The scope of the term "aqueous ethanol solution" includes liquors containing ethanol. Examples of such liquors include, but are not limited to, whisky, brandy, shochu, gin, vodka, neutral spirits, and brewages.

In the present invention, a citrus fruit comprising an orange pericarp and an aqueous ethanol solution are used as source materials. In this invention, an aqueous ethanol solution having a citrus fruit comprising an orange pericarp immersed therein is used. The citrus fruit is an orange. A fruit pericarp is used since many fruit aroma components are highly present in fruit pericarps and in fruit pulps adjacent thereto. Any of frozen, chilled, and dried fruit pericarps can be used. Also, the water content of a fruit pericarp is not limited. A fruit pericarp may be used alone or may be used in combination with a fruit juice and/or a fruit pulp. Preferably, a frozen product of a raw citrus fruit pericarp is used.

In the present invention, an orange is used as a citrus fruit. Orange is a plant belonging to citrus fruits, and is broadly classified into three categories: sweet oranges, sour oranges, and mandarin oranges. In this invention, any given type of orange can be used without limitation regardless of its origin, variety, or the like. Examples of sweet oranges include, but are not limited to, common oranges of early, medium and late varieties, navel oranges, and blood oranges, and examples of bitter oranges include, but are not limited to, *Citrus aurantium* L. In a preferred embodiment of this invention, a navel orange or a Valencia orange can be used as an orange.

In the present invention, not only a citrus fruit but also other biological material may be added to an aqueous alcohol solution. Such other biological material added to an aqueous alcohol solution can be a plant material or an animal material. Examples of plant materials include, but are not limited to, fruits, fruit pericarps, herbs, grass roots and barks (*e.g.,* perilla, cherry leaf), root crops, vegetables, and roasted materials such as spice and coffee, and preferred examples thereof are fruits, fruit pericarps, and herbs. One type of plant material may be used alone, or two or more types thereof may be used in combination. Any of frozen, chilled, and dried plant materials can be used. Also, the water content of a plant material is not limited.

The type of a fruit used in combination with a citrus fruit is not particularly limited. Examples thereof include, but are not limited to, different fruits, such as apple, grape, muscat, cherry, melon, watermelon, cassis, peach, tropical fruits (*e.g.,* pineapple, guava, banana, mango, acerola, papaya, passion fruit), and other fruits (*e.g.,* Japanese apricot, Japanese pear, European pear, apricot, Japanese plum, berries (including strawberry, juniper berry, cranberry, blueberry, raspberry, etc.), kiwi fruit), and their pericarps. One type of fruit may be used alone, or two or more types of fruits may be used in combination. A fruit pericarp is preferably used since many fruit aroma components are highly present in fruit pericarps and in fruit pulps adjacent thereto.

The type of a herb used in the present invention is not particularly limited as long as it is of a type known as a herb. Examples thereof include, but are not limited to, perilla, Japanese prickly ash, tea (scientific name: *Camellia sinensis* (L.) Kuntze), cinnamon, and coriander. One type of herb may be used alone, or two or more types of herbs may be used in combination.

The source material added to an aqueous alcohol solution before distillation may be a source material that has been processed before distillation. For example, a biological material may be dried in advance before being subjected to distillation, or may be used raw without being dried. Also, a biological material may be cut or frozen before distillation. Further, a frozen biological material may be pulverized. Lees of a biological material obtained after squeezing the biological material can also be used as a source material. In the present invention, two or more types of such processings may be performed in combination.

The ratio of ethanol to water in an aqueous alcohol solution to which a citrus fruit is added is not limited, but is in the range of preferably from 5:95 to 99: 1, more preferably from 5:95 to 80:20, or more preferably from 5:95 to 50:50, or more preferably from 10:90 to 40:60, or more preferably from 10:90 to 30:70.

In the present invention, no addition of ethanol or water is done during distillation. Further addition of ethanol and water imposes an additional effort on an operator and places an increased load on the operator. Also, addition of water leads to an increase in the amount of a liquid product obtained by distillation, thereby causing a decrease in the concentration of collected aroma components. Thus, no addition of water enhances the flavor of a distillate, and also reduces the amount of an obtained liquid product, thereby saving a space for storage.

The ethanol concentration of a distilled liquor obtained after distillation is in the range of from 10 to 80%, preferably from 20 to 75%, more preferably from 30 to 70%, still more preferably from 35 to 65%, especially preferably from 40 to 60%. As referred to herein, the ethanol concentration is expressed on a v/v% basis, and can be measured by any known methods -- for example, by a vibrational densimeter. To be specific, an aqueous ethanol solution is filtered or sonicated, if necessary, to remove carbon dioxide gas, and the prepared CO₂-free sample is distilled under direct fire. Then, the density at 15°C of the resulting distillate is measured and converted to an alcohol content according to Table 2 "Conversion among Alcohol Content, Density (15°C) and Specific Gravity (15/15°C)" which is annexed to the Official Analysis Method of the National Tax Agency in Japan (National Tax Agency Directive No. 6 in 2007, revised on June 22, 2007).

### (Distillation)

In the present invention, a citrus fruit comprsing an orange pericarp is added, as a first step, to an aqueous ethanol solution. Addition of a citrus fruit may be done in a container (*e.g.,* still) that is heated during distillation. Also, a citrus fruit and an aqueous ethanol solution may first be in part or in whole mixed together, and then the mixture may be put into the container. The duration of immersion after addition is in the range of from 4 to 72 hours, preferably from 8 to 48 hours, more preferably from 12 to 24 hours. The immersion temperature is in the range of from 5 to 45°C, preferably from 10 to 40°C, more preferably from 15 to 35°C. The mixing proportion of a citrus fruit and an aqueous ethanol solution is not particularly limited -- for example, the citrus fruit can be used in a proportion of from 0.5 to 50% (w/v), or from 10% to 50% (w/v), or 20 to 30% (w/v), based on the aqueous ethanol solution. The mixture obtained by mixing source materials not only comprises a citrus fruit, ethanol, and water, but may also contain any other components as long as such other components do not adversely affect the effects of this invention. For example, an aqueous ethanol solution can be used for the purpose of supplying ethanol and water -- such an aqueous ethanol solution may be a liquor. Also, a fermented mash can be used as a liquor.

As a next step, distillation is started by heating the prepared mixture. Distillation may be performed under reduced pressure or may be performed under atmospheric pressure (*i.e.,* without being pretreated for vacuum or pressure distillation). Preferably, distillation is performed by heating under atmospheric pressure. The pressure employed during distillation is typically in the range of from 95 kPa to 106 kPa. The method of this invention is typically performed using a single pot still, or can also be performed using a pot still with a plate tower mounted thereon.

The mixture is heated to generate a vapor, which is then condensed with a condenser to produce a distillate. The ethanol concentration of a distillate during its production is in the range of from 52 to 80%, preferably from 52 to 75%, more preferably from 53 to 70%, still more preferably from 55 to 63%, especially preferably from 56 to 60%. The ethanol concentration of the distillate may only temporally fall within the aforementioned range, but is preferably kept to within the aforementioned range for the longest possible period of time.

The ethanol concentration of a distillate refers to an ethanol concentration exhibited by the distillate during its production, and varies depending on the timing of distillate production. Since the ethanol concentration of a distillate does not change significantly even after a while from its production, the ethanol concentration of the distillate during its production can be estimated even by measuring the concentration not immediately after its production but after some period of time has passed from its production. For example, when a distillate is collected in separate fractions of relatively small amounts and the different distillate fractions are measured for ethanol concentration, the ethanol concentration exhibited by the distillate during its production, or an approximate ethanol concentration very close to said concentration, can be determined. In contrast, when the ethanol concentration is measured by an improper procedure -- *e.g.,* when a distillate is collected in separate fractions of relatively large amounts and the different distillate fractions are measured for ethanol concentration, or when two or more distillate fractions are combined together and then measured for ethanol concentration --, the ethanol concentration exhibited by the distillate during its production may not be determined in an accurate way.

### (Use of distilled liquor)

The distilled liquor with a citrus fruit aroma obtained according to the method of the present invention can be drunk as it is, or in some cases may be drunk in a state diluted to some extent. In another instance, the distilled liquor can be used in a beverage or a food. Therefore, the obtained distillate fractions may be used all together, or fractions with an unfavorable odor may be excluded and only favorable fractions may be picked up and used. In order to achieve this purpose, for example, only those fractions can be picked up which are obtained while the ethanol concentration of the distillate during its production falls within the range of from 52 to 80%, preferably from 52 to 75%, more preferably from 53 to 70%, still more preferably from 55 to 63%, especially preferably from 56 to 60%. Depending on the circumstances, those fractions obtained before the ethanol concentration of the distillate during its production drops to fall within the aforementioned range may be included as fractions to be used.

The distilled liquor with a citrus fruit aroma obtained according to the present invention can be drunk as it is or in a state diluted with water or ethanol. On that occasion, any additional components such as sugar, syrup, and/or acidulant may be added depending on the need. In another instance, the distilled liquor obtained according to the method of this invention can be added to a beverage or a food. Examples of such a beverage or food include, but are not limited to, various beverages such as alcoholic beverages (*e.g.,* shochu-based cocktail), carbonated beverages, fruit beverages, and black tea, and various foods such as ice cream, cake, candy, gum, confectionary, and bread. The amount of an aqueous ethanol solution added is not particularly limited, and is determined depending on the intensity and preference of an aroma to be imparted.

The package used to make a packaged beverage comprising the distilled liquor of the present invention is not particularly limited, and can be any of commonly used packages. A preferred example of a resin package is a polyethylene terephthalate-based molded package (so-called PET bottle). Other packages besides resin packages include metal can, paper packages combined with metallic foils or plastic films, and glass bottle. The beverage of this invention can be provided in a form packed and sealed in such a package. The volume of the package is not particularly limited, and is for example in the range of from 150 mL to 1000 mL, preferably from 190 mL to 800 mL.

During the process of production of a packaged beverage comprising the distilled liquor obtained according to the method of the present invention, heat sterilization can be performed. The heat sterilization conditions adopted in this invention can be, for example, those conditions having similar effects to those of the conditions stipulated in the Food Sanitation Act of Japan, and can be specifically set to the following conditions: at 60 to 150°C, preferably at 90 to 150°C, more preferably at 110 to 150°C, for 1 second to 60 minutes, preferably for 1 second to 30 minutes. When the beverage of this invention is produced using a heat-resistant package (e.g., metal can, glass bottle), the beverage can be subjected to retort sterilization (at 110 to 140°C for 1 minute to several tens of minutes). When the beverage is produced using a non-heat-resistant package (*e.g.,* PET bottle, paper package), a prepared liquid, for example, can be first sterilized at high temperatures for a short period of time using a plate-type heat exchanger or the like (UHT sterilization at 110 to 150°C for 1 second to several tens of seconds), and then cooled to a specified temperature and packed in the package.

### EXAMPLES

Hereunder, the present invention will be described in more detail by reference to specific examples of this invention, but this invention is not limited to these specific examples. Unless otherwise stated herein, all numerical ranges are inclusive of their endpoints, and all concentrations are expressed on a weight basis.

### Experiment 1: Production and evaluation of distilled liquors

### (1) Production and evaluation of distilled liquors

Different distilled liquors were produced by immersing orange pericarps in an aqueous ethanol solution at 10 to 35°C for 18 hours and then subjecting the immersion liquid to distillation under atmospheric pressure. The still, condenser, distillate collector, etc. used were of commonly available types.

Three hundred grams of frozen pericarps of oranges (made in Valencia) were mixed with 700 mL of neutral spirits (ethanol concentration: 50 v/v%), and immersed and left to stand therein for 18 hours. Then, the still was heated to start distillation.

During distillation, distilled liquor fractions were obtained by collecting every 30 mL of distillate. When the ethanol concentration of an obtained distillate fell below 49 v/v%, the obtained distillate gave off a strong overboiled odor. In this experiment, no addition of ethanol or water was done during distillation.

The obtained distilled liquor fractions were subjected to sensory evaluation regarding characteristic orange aroma by three trained panelists. The sensory ratings were determined through discussion among the panelists. The rating scale is as detailed below.
- 5 points: Characteristic orange aroma is strongly felt.
- 4 points: Characteristic orange aroma is somewhat strongly felt.
- 3 points: Characteristic orange aroma is felt.
- 2 points: Characteristic orange aroma is slightly felt.
- 1 point: No characteristic orange aroma is felt.

**[Table 1-1]**

| Fraction No. | Ethanol concentration | Sensory rating | Comment |
|---|---|---|---|
| 1 | 84.9 | 1 | A sharp top note common to citrus fruits was felt. |
| 2 | 84.4 | 1 | A sharp top note common to citrus fruits was felt. |
| 3 | 84.0 | 1 | A sharp top note common to citrus fruits was felt. |
| 4 | 83.6 | 1 | A sharp top note common to citrus fruits was felt. |
| 5 | 83.0 | 1 | A sharp top note common to citrus fruits was felt. |
| 6 | 81.4 | 2 | A sharp top note accompanied by a slight mild citrus aroma like orange oil was felt. |
| 7 | 78.6 | 3 | A sharp top note accompanied by a somewhat strong mild citrus aroma like orange oil was felt. |
| 8 | 73.7 | 4 | A common citrus aroma accompanied by a mild citrus aroma like orange oil was felt, and also a heavy fruit juice sensation reminiscent of orange characteristics was somewhat prominent, so that an orange aroma was felt. |
| 9 | 65.8 | 5 | A heavy fruit juice sensation reminiscent of orange was noticeably felt, so that a strong orange aroma was felt. |
| 10 | 54.7 | 5 | A characteristic orange sensation was felt more strongly. |
| 11 | 51.5 | 5 | A characteristic orange sensation was still felt noticeably, but overboiled odor was also felt very slightly. |
| 12 | 49.2 | 4 | An orange sensation slightly diminished, and overboiled odor became increasingly prominent. |
| Mixture of all fractions | 72.9 | 4 | A noticeable characteristic orange sensation, an orange oil-like top note, and a flavorful orange aroma reminiscent of fruit juice were felt in a well-balanced manner. In particular, a heavy citrus aroma reminiscent of orange flavedo and albedo was strongly felt. |

As evident from the above table, distilled liquors with a favorable orange aroma were obtained successfully by collecting distillate fractions with an ethanol concentration of from 50 to 80 v/v%.

### (2) Analysis of aroma components

The obtained distilled liquors were determined for the contents of nootkatone and caryophyllene oxide, which are considered as aroma components characteristic of citrus fruits. To be specific, a first distilled liquor prepared by mixing all of Fraction Nos. 1 to 12, and a second distilled liquor prepared by mixing Fraction Nos. 1 to 9 were quantified for the contents of these components by gas-liquid chromatography (GLC) using reference standards.

The results are shown in the table given below. It was confirmed that the distilled liquors obtained according to the present invention were rich in aroma components characteristic of citrus fruits.

**[Table 1-2]**

| Fraction No. | Nootkatone (ppb) | Caryophyllene oxide (ppb) |
|---|---|---|
| 1 to 12 (total) | 159 | 579 |
| 1 to 9 (total) | 113 | 409 |

### Experiment 2: Production and evaluation of packaged alcoholic beverages

A packaged alcoholic beverage was produced with addition of a distilled liquor with an orange aroma as produced in Experiment 1.

A beverage sample of Inventive Example was produced with addition of 0.1% of a distilled citrus liquor (prepared by mixing Fraction Nos. 8 to 12 and adjusting alcohol content to 58 v/v%) as produced in Experiment 1. A beverage sample of Comparative Example was produced without addition of the distilled liquor produced in Experiment 1. To be specific, packaged alcoholic beverages were produced by mixing fructose-glucose syrup (final concentration: 4 w/v%), Valencia orange juice made in Brazil (final concentration: 3 w/v%, in terms of straight fruit juice), and an acidulant (citric acid; final concentration: 0.3 w/v%) with or without the distilled citrus liquor and adjusting the final alcohol concentration to 5 v/v% with addition of water and neutral spirits (58 v/v%) (beverage pH: about 3.3).

The obtained packaged beverages were evaluated for orange aroma and overall palatability. To be specific, the beverage samples were subjected to sensory evaluation by three trained panelists. The final ratings were determined by averaging the ratings given by all the panelists. The rating scale is as detailed below.

### (Orange aroma)

| | |
|---|---|
| - 5 points: | Characteristic orange aroma is strongly felt. |
| - 4 points: | Characteristic orange aroma is somewhat strongly felt. |
| - 3 points: | Characteristic orange aroma is felt. |
| - 2 points: | Characteristic orange aroma is slightly felt. |
| - 1 point: | No characteristic orange aroma is felt. |

### (Beverage palatability)

| | |
|---|---|
| - 5 points: | Very palatable |
| - 4 points: | Palatable |
| - 3 points: | Passable |
| - 2 points: | Less palatable |
| - 1 point: | Unpalatable |

**[Table 2]**

| Sample | 2-1 (Comparative Ex.) | 2-2 (Inventive Ex.) |
|---|---|---|
| Orange characteristics | 1.33 | 4.67 |
| Overall beverage palatability | 1.33 | 5.00 |
| Comment | The beverage was unbalanced and unpalatable because of lack of orange characteristics and presence of prominent alcohol odor. | The beverage was palatable because of its flavor reminiscent of orange and its good compatibility with a liquor. |

### Experiment 3: Production and evaluation of packaged alcoholic beverages

Different packaged alcoholic beverages were produced and evaluated by following the same procedures as in Experiment 2, except that neutral spirits was replaced with each of the following distilled liquors (alcohol concentration: 40 v/v%) (final alcohol concentration: 5 v/v%).

### (Distilled liquors used)

| | |
|---|---|
| - Whisky: | "Suntory Whisky Kakubin" |
| - Gin: | "Suntory Dry Gin Extra" |
| - Bourbon: | "Jim Beam" |
| - Brandy: | "Suntory Brandy V.S.O.P" |
| - Tequila: | "Sauza Silver Tequila" |
| - Rum: | "Suntory Rum Gold" |

**[Table 3]**

| Sample | 3-1 | 3-2 | 3-3 | 3-4 | 3-5 | 3-6 |
|---|---|---|---|---|---|---|
| Distilled liquor | Whisky | Gin | Bourbon | Brandy | Tequila | Rum |
| Orange characteristics | 5.00 | 4.67 | 5.00 | 3.67 | 4.33 | 3.67 |
| Overall beverage palatability | 5.00 | 5.00 | 5.00 | 4.67 | 4.67 | 4.67 |
| Comment | The aftertaste of whisky and an orange aroma were well harmonized. | The fresh aroma of gin and an orange aroma were well matched. | The last note of bourbon and an orange aroma were well balanced. | The heavy aroma unique to brandy was masked. | The peculiar aroma unique to tequila diminished, making the beverage easier to drink. | The mellow sweet aroma of rum and an orange aroma were well matched. |

Packaged alcoholic beverages with excellent flavor were produced successfully by blending the distilled liquor with an orange aroma of the present invention with other liquors. In particular, those alcoholic beverages produced by blending the distilled liquor of this invention with whisky, gin, or bourbon were excellent in overall quality because of good harmony between orange aroma and distilled liquor.

### Experiment 4: Production and evaluation of packaged alcoholic beverages

Different whisky and soda beverages with an alcohol concentration of 6 v/v% were produced and evaluated. To be specific, 167 mL of commercially available bourbon ("Jim Beam", produced by Beam Suntory Inc.; alcohol concentration: 40 v/v%) was mixed with 833 mL of commercially available carbonated water ("Suntory Soda", produced by Suntoryfoods Limited), and then to the mixture, neutral spirits (alcohol concentration: 58 v/v%), orange juice, or a distilled citrus liquor (prepared by mixing Fraction Nos. 8 to 12 and adjusting alcohol content to 58 v/v%) as produced in Experiment 1 was added at the concentrations indicated in the table given below.

The obtained beverage samples were evaluated for orange characteristics and beverage palatability by following the same procedure as in Experiments 2 and 3. As a result, alcoholic beverages with a well-balanced and favorable citrus aroma were obtained successfully with addition of the distilled citrus liquor of the present invention.

**[Table 4]**

| Sample | 4-1 | 4-2 | 4-3 | 4-4 | 4-5 | 4-6 | 4-7 |
|---|---|---|---|---|---|---|---|
| Liquor added | 0.1 % neutral spirits | 0.1 % orange juice | 0.1% distilled citrus liquor | 0.5% distilled citrus liquor | 1.0% distilled citrus liquor | 1.5% distilled citrus liquor | 2.0% distilled citrus liquor |
| Orange characteristics | 1.00 | 1.33 | 2.67 | 3.00 | 3.67 | 4.00 | 4.67 |
| Overall beverage palatability | 2.00 | 2.33 | 4.67 | 5.00 | 5.00 | 4.33 | 3.00 |
| Comment | The beverage lacked in palatability because of too prominent barrel odor. | There was no balance or harmony between liquor characteristics and orange characteristics. | The beverage was well balanced and very palatable. | The beverage was well balanced and very palatable. | The beverage was well balanced and very palatable. | The beverage was well balanced but somewhat strong in orange aroma. | The beverage was well balanced, but quite strong orange characteristics significantly weaken the aroma of bourbon. |

## Claims

1. A method for producing a distilled liquor, the method comprising:
immersing a citrus fruit comprising an orange pericarp in an aqueous ethanol solution at 5 to 45°C for 4 to 72 hours; and then,
subjecting the aqueous ethanol solution to distillation under atmospheric pressure while the ethanol concentration of a distillate falls within the range of from 52 to 80%.

2. The method according to claim 1, wherein no addition of ethanol or water is done during the distillation.

3. The method according to claim 1 or 2, wherein the temperature of the aqueous ethanol solution in which the citrus fruit is immersed is in the range of from 10 to 40°C, and the duration of immersing the citrus fruit is in the range of from 8 to 48 hours.

4. The method according to any of claims 1 to 3, wherein the orange pericarp comprises a frozen orange pericarp.

## Patentansprüche

1. Ein Verfahren zur Herstellung einer destillierten Spirituose, wobei das Verfahren umfasst:
Einlegen einer Zitrusfrucht umfassend einen Orangen-Perikarp in eine wässrige Ethanollösung bei 5 bis 45°C für 4 bis 72 Stunden; und anschließend Unterziehen der wässrigen Ethanollösung einer Destillation bei atmosphärischem Druck, wobei die Ethanolkonzentration eines Destillats im Bereich von 52 bis 80% liegt.

2. Das Verfahren gemäß Anspruch 1, wobei während der Destillation kein Ethanol oder Wasser zugegeben wird.

3. Das Verfahren gemäß Anspruch 1 oder 2, wobei die Temperatur der wässrigen Ethanollösung, in welche die Zitrusfrucht eingelegt ist, im Bereich von 10 bis 40°C liegt und die Dauer des Einlegens der Zitrusfrucht im Bereich von 8 bis 48 Stunden liegt.

4. Das Verfahren gemäß einem der Ansprüche 1 bis 3, wobei der Orangen-Perikarp einen gefrorenen Orangen-Perikarp umfasst.

## Revendications

1. Méthode de production d'une liqueur distillée, la méthode comprenant :
l'immersion d'un agrume comprenant un péricarpe d'orange dans une solution éthanolique aqueuse à une température de 5 à 45°C pendant 4 à 72 heures ; et puis
la soumission de la solution éthanolique aqueuse à une distillation sous pression atmosphérique alors que la concentration en éthanol d'un distillat tombe dans la plage allant de 52 à 80 %.

2. Méthode selon la revendication 1, dans laquelle aucune addition d'éthanol ou d'eau n'est faite pendant la distillation.

3. Méthode selon la revendication 1 ou 2, dans laquelle la température de la solution éthanolique aqueuse dans laquelle l'agrume est immergé est comprise dans la plage allant de 10 à 40 °C et la durée de l'immersion de l'agrume est comprise dans la plage allant de 8 à 48 heures.

4. Méthode selon l'une quelconque des revendications 1 à 3, dans laquelle le péricarpe d'orange comprend un péricarpe d'orange congelé.
